# EUROPÄISCHE PATENTSCHRIFT

(11) **EP 3 947 011 B1**
(45) Veröffentlichungstag und Bekanntmachung des Hinweises auf die Patenterteilung: **02.07.2025**
(21) Anmeldenummer: 20712474.4
(22) Anmeldetag: 11.03.2020
(51) Int. Cl.: G06V 20/59, G06V 40/10, G06V 40/20, B60K 35/10, B60K 35/22, B60K 35/60, B60K 35/65, B60K 35/85

(54) **VERFAHREN ZUR BEREITSTELLUNG EINES SPRACHDIALOGS IN GEBÄRDENSPRACHE BEI EINEM SPRACHDIALOG-SYSTEM FÜR EIN FAHRZEUG**
METHOD FOR PROVIDING VOICE CONTROL IN SIGN LANGUAGE IN A VOICE CONTROL SYSTEM FOR A VEHICLE
PROCÉDÉ POUR METTRE AU POINT UN DIALOGUE À COMMANDE VOCALE FONCTIONNANT AVEC LA LANGUE DES SIGNES DANS UN SYSTÈME DE DIALOGUE À COMMANDE VOCALE POUR UN VÉHICULE

(30) Priorität: 25.03.2019 DE 102019204054
(43) Veröffentlichungstag der Anmeldung: 09.02.2022
(73) Patentinhaber: VOLKSWAGEN AKTIENGESELLSCHAFT, 38440 Wolfsburg (DE)
(72) Erfinder: ROSE, Jewgeni, 38118 Braunschweig (DE)
(86) Internationale Anmeldenummer: PCT/EP2020/056407
(87) Internationale Veröffentlichungsnummer: WO 2020/193123

(56) Entgegenhaltungen:
- CN-A- 107 785 017
- CN-B- 106 789 593
- DE-A1- 102013 014 877
- DE-T5- 112015 003 655
- DE-T5- 112016 006 769
- JP-B2- 4 797 858
- US-A1- 2013 261 871

## Beschreibung

Die vorliegende Erfindung betrifft ein Verfahren zur Bereitstellung eines Sprachdialogs in Gebärdensprache bei einem Sprachdialog-System für ein Fahrzeug. Ferner bezieht sich die Erfindung auf ein System sowie ein Fahrzeug.

Sprachdialogsysteme im Fahrzeug ermöglichen eine Bedienung des Fahrzeuges sowie einen Informationsaustausch mit dem Fahrzeug durch sprachliche Kommunikation. In Zeiten der Automatisierung von Fahrfunktionen kann auf diese Weise ein zusätzliches Fahrerlebnis geschaffen werden, das darin besteht, mit dem Fahrzeug zum Informationsaustausch und/oder zur Unterhaltung kommunizieren zu können. Auch ist eine Gestensteuerung von Instrumenten im Fahrzeug bekannt. Jedoch ist das Führen von Dialogen mit dem Fahrzeug für Menschen mit Schwierigkeiten mit der Lautsprache bzw. gehörlose und schwer hörende Menschen noch problematisch.

In der US 2005/0271279 A1 ist eine Interaktion mit Maschinen über Gesten offenbart, um darüber Anweisungen an die Maschine bereitzustellen.

In der US 2013/0261871 A1 ist ebenfalls eine gestenbasierte Steuerung offenbart.

Die US 2016/0107654 A1 offenbart ein Aktivierungsverfahren für Benutzereingaben.

Aktivierungsverfahren für Benutzereingaben sind zudem aus den Dokumenten DE 11 2016 006 769 T5, JP 4 797 858 B2, CN 107 785 017 A, DE 10 2013 014 877 A1, US 2013/261 871 A1, CN 106 789 593 B und DE 11 2015 003 655 T5 bekannt.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine Lösung für ein nicht-akustisches Sprachdialogsystem bereitzustellen.

Die voranstehende Aufgabe wird gelöst durch ein Verfahren mit den Merkmalen des Anspruchs 1, ein System mit den Merkmalen des Anspruchs 3 sowie durch ein Fahrzeug mit den Merkmalen des Anspruchs 6.

Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen System sowie dem erfindungsgemäßen Fahrzeug, und jeweils umgekehrt, so dass bezüglich der Offenbarung zu den einzelnen Erfindungsaspekten stets wechselseitig Bezug genommen wird bzw. werden kann.

Die Aufgabe wird insbesondere gelöst durch ein Verfahren zur Bereitstellung eines Sprachdialogs in Gebärdensprache bei einem Sprachdialog-System, insbesondere nichtakustischen Sprachdialog-Systems, für ein Fahrzeug. Hierbei ist insbesondere vorgesehen, dass die nachfolgenden Schritte durchgeführt werden, vorzugsweise nacheinander in der angegebenen oder in beliebiger Reihenfolge, wobei einzelne Schritte ggf. auch wiederholt durchgeführt werden können:
- Durchführen einer optischen Erfassung einer Eingabeinformation eines Fahrzeuginsassen, insbesondere durch eine Bilderfassungsanordnung,
- Durchführen einer Auswertung der erfassten Eingabeinformation, insbesondere durch eine Verarbeitungsanordnung,
- Bereitstellen einer visuellen Ausgabe in Gebärdensprache in Abhängigkeit von der Auswertung, insbesondere durch eine Ausgabeanordnung.

Auf diese Weise kann eine nicht-akustische Durchführung eines Sprachdialogs mittels des Sprachdialog-Systems bereitgestellt werden, um natürlichsprachliche Dialoge mit dem Fahrzeug führen zu können. Der natürlichsprachliche Dialog wird insbesondere durch die Eingabeinformation (z. B. in der Form einer "Rede" oder Frage oder Antwort oder Anweisung) und die darauf bezogene Ausgabe (z. B. in der Form einer "Gegenrede" oder Antwort auf die Frage oder Frage oder Rückmeldung auf die Anweisung) gebildet. Ein besonderer Vorteil ist hierbei, dass die Ausgabe in Gebärdensprache bereitgestellt wird, um den Dialog auch für Menschen zu ermöglichen, für die die Nutzung einer Lautsprache für den Dialog mit Schwierigkeiten verbunden ist. Es kann daher möglich sein, dass der Dialog vollständig ohne Lautsprache auskommt.

Es kann ferner möglich sein, dass die Eingabeinformation Informationen über eine Gebärdensprache des Fahrzeuginsassen aufweist. Damit kann der durch das Sprachdialog-System bereitgestellte Dialog vollständig in Gebärdensprache bereitgestellt werden. Die Eingabeinformation umfasst hierzu insbesondere Informationen über eine Gestik und/oder Gesichtsmimik und/oder lautlos gesprochene Wörter und/oder Körperhaltung des Fahrzeuginsassen, welche durch die Auswertung durch eine Verarbeitungsanordnung analysiert werden können. Um die Eingabeinformation mit diesen Informationen zu erfassen, kann z. B. eine Bildaufzeichnung des Fahrzeuginsassen durch eine Bilderfassungsanordnung durchgeführt werden. Die Auswertung kann ferner eine Bildanalyse und/oder Methoden des maschinellen Lernens umfassen, um z. B. eine Klassifizierung der Eingabeinformation hinsichtlich vordefinierter Gesten und/oder Zeichen durchzuführen. Auf diese Weise kann durch das Sprachdialog-System die Situation im Fahrzeuginnenraum analysiert und im Dialog verwertet werden.

Ferner ist es vorgesehen, dass das Durchführen der Auswertung die nachfolgenden Schritte umfasst:
- Durchführen einer Detektion einer Interaktion des Fahrzeuginsassen mit dem Sprachdialog-System in der Gebärdensprache anhand der Eingabeinformation, wobei vorzugsweise die Eingabeinformation als eine Bildaufzeichnung des Fahrzeuginsassen ausgeführt ist, um anhand der Bildaufzeichnung die Interaktion zumindest als eine Geste des Fahrzeuginsassen zu detektieren,
- Durchführen einer Analyse, insbesondere Bildanalyse, der Eingabeinformation zur Übersetzung der Gebärdensprache in eine für das Sprachdialog-System auswertbare inhaltliche Übersetzungsinformation, vorzugsweise eine Textinformation, insbesondere nur bei erfolgreicher Detektion der Interaktion,
- Durchführen einer Detektion einer weiteren Geste des Fahrzeuginsassen anhand der Eingabeinformation, welche für eine Zusatzinformation spezifisch ist,
- Generieren einer Antwort anhand der Übersetzungsinformation und anhand der Zusatzinformation, um die Antwort in der Gebärdensprache durch die visuelle Ausgabe auszugeben.

Dies ermöglicht eine zuverlässige Auswertung der Eingabeinformation, um den Dialog bereitzustellen. Das Generieren der Antwort kann ferner z. B. eine inhaltliche Analyse der Übersetzungsinformation umfassen, um z. B. eine inhaltliche Information als die Antwort zu bestimmen, welche auf die Eingabeinformation (z. B. als Frage) inhaltlich bezogen ist. Die Ausgabe kann besonders vorteilhaft in der Form der Ausgabe eines grafischen Avatar und/oder einer abstrakten Form und/oder durch Zeichen (also zeichenbasiert) und ggf. zusätzlich als Audio-Ausgabe erfolgen.

Es kann möglich sein, dass bei der Auswertung der Eingabeinformation wenigstens eine Geste des Fahrzeuginsassen detektiert werden kann. Diese Geste des Fahrzeuginsassen kann als eine Geste im Rahmen der Gebärdensprache detektiert werden, und entsprechend zur Übersetzung der Gebärdensprache in die Übersetzungsinformation dienen. Auch kann die Geste als eine weitere Geste detektiert werden, welche für eine Zusatzinformation spezifisch ist. Als weitere Geste handelt es sich z. B. um ein Zeigen auf ein Objekt, welches entsprechend das selektierte Objekt als die Zusatzinformation bereitstellt. Anhand der detektierten weiteren Geste kann zusätzlich zur Übersetzung die Zusatzinformation bei der Auswertung genutzt werden, um die Antwort zu generieren. Bspw. indiziert die Übersetzungsinformation eine bestimmte Frage, welche das Objekt betrifft. In anderen Worten kann die Übersetzungsinformation die Funktion indizieren, und die Zusatzinformation einen Parameter für diese Funktion. Als Ausgabe der Funktion kann dann die Antwort generiert werden.

Die weitere Geste und die Zusatzinformation werden z. B. dadurch ermittelt, dass die Bilderfassungsanordnung, insbesondere eine erste Bilderfassungseinheit wie eine Kamera, die Eingabeinformation erfasst, aus welcher sich die weitere Geste ableiten lässt (wie das Zeigen auf das Objekt). Die Zusatzinformation (also das spezifische Objekt) kann z. B. durch die Abfrage (weitere Erfassung) wenigstens einer weiteren Bilderfassungsanordnung und/oder wenigstens einer weiteren Bilderfassungseinheit des Fahrzeuges ermittelt werden, durch welche die Umgebung des Fahrzeuges und damit das Objekt erfasst wird. Hierzu wird bspw. eine Richtungsinformation anhand der weiteren Geste abgeleitet (in welche Richtung wird gezeigt?), und mit der weiteren Erfassung des Objekts verglichen. Auch ist es denkbar, dass das Objekt anhand der Richtungsinformation dadurch identifiziert wird, dass eine Standortinformation über einen aktuellen Standort des Fahrzeuges ausgewertet und insbesondere mit Umgebungsinformationen und der Richtungsinformation verglichen wird.

Erfindungsgemäß ist es weiterhin vorgesehen, dass die Antwort wenigstens eine der nachfolgenden Informationen (mit den nachfolgenden Inhalten) umfasst:
- eine Objekt-Information über ein Objekt in einer Umgebung des Fahrzeuges, wobei hierzu die Zusatzinformation eine Selektion des Objekts bereitstellt, bevorzugt als eine Richtungsangabe zum Objekt,
- eine Wetterinformation, insbesondere über ein Wetter am Standort des Fahrzeuges,
- eine Umgebungsinformation, vorzugsweise eine Information über einen aktuellen Standort des Fahrzeuges,
- eine Nachrichteninformation, insbesondere über lokale Nachrichten am Standort des Fahrzeuges,
- eine Medieninformation, wie bspw. Videos oder Literatur oder dergleichen,
wobei besonders bevorzugt zum Generieren der Antwort die Informationen hinsichtlich einer Verfügbarkeit einer Ausgabe der Informationen in der Gebärdensprache gefiltert werden. Dies ermöglicht die Bereitstellung eines breiten Informationsspektrums für den Sprachdialog. Die weitere Geste gemäß der Zusatzinformation ist zur Selektion des Objekts z. B. als eine Fingergeste oder dergleichen ausgebildet, mit welcher auf das Objekt gestisch gezeigt werden kann. Gemäß der Filterung können dabei z. B. nur solche Inhalte in Betracht gezogen werden, welche sich zur Ausgabe in Gebärdensprache eignen. Auch kann es möglich sein, dass eine Information in Textform hierzu durch ein erfindungsgemäßes Verfahren und/oder System in Gebärdensprache übersetzt wird, z. B. mittels der Verarbeitungsanordnung. Hierzu kann die Verarbeitungsanordnung ggf. auch mit einer externen Datenverarbeitungsanlage kommunizieren, um z. B über einen externen Server bzw. über Cloud-Computing diese Übersetzung durchzuführen.

Ebenfalls Gegenstand der Erfindung ist ein System für ein Fahrzeug zur Bereitstellung eines Sprachdialogs in Gebärdensprache. Das System kann bspw. als eine Fahrzeugelektronik ausgeführt sein, und damit geeignet sein, in das Fahrzeug fest integriert zu werden. Hierbei ist vorgesehen, dass das System wenigstens eine der nachfolgenden Komponenten aufweist:
- eine Bilderfassungsanordnung, insbesondere ein Kamerasystem, zur Erfassung einer Eingabeinformation eines Fahrzeuginsassen, wobei vorzugsweise die Eingabeinformation als eine Bildinformation, insbesondere Bildaufzeichnung, ausgeführt ist,
- eine (insbesondere elektronische) Verarbeitungsanordnung zur Auswertung der erfassten Eingabeinformation, wobei die Verarbeitungsanordnung z. B. als ein Steuergerät und/oder eine Elektronik und/oder ein Mikrocontroller und/oder dergleichen ausgeführt ist,
- eine Ausgabeanordnung zur visuellen Ausgabe in Gebärdensprache in Abhängigkeit von der Auswertung.

Damit bringt das erfindungsgemäße System die gleichen Vorteile mit sich, wie sie ausführlich mit Bezug auf ein erfindungsgemäßes Verfahren beschrieben worden sind. Zudem kann das System geeignet sein, ein erfindungsgemäßes Verfahren durchzuführen. Es ist ferner denkbar, dass das System als ein Sprachdialog-System eines erfindungsgemäßen Verfahrens ausgebildet ist, um die Schritte des Verfahrens durchzuführen.

Das System kann bspw. als eine technische Komponente im Fahrzeug ausgebildet sein, welche den Innenraum des Fahrzeugs mit Hilfe der Bilderfassungsanordnung, insbesondere in der Form eines Kamerasystems, überwacht und in der Lage ist zu erkennen, wann ein Fahrzeuginsasse (Passagier) mit dem System, insbesondere Sprachdialog-System (Sprachassistenten), interagiert und die Gebärdensprache in Text übersetzt. Hierdurch kann sich der Sprachassistent genauso verhalten, als wenn der Nutzer über Sprache mit dem Sprachassistenten sprechen würde. Die Bilderfassungsanordnung wird z. B. vorne im Armaturenbrett oder dem Rückspiegel verbaut und bietet damit eine genaue Nutzerüberwachung.

Vorteilhafterweise kann bei der Erfindung vorgesehen sein, dass die Bilderfassungsanordnung als eine Infrarot-Kamera ausgebildet ist, um wenigstens eine Geste des Fahrzeuginsassen optisch zu erfassen. Die Kamera kann z. B. für eine Erfassung im Nah- und/oder Ferninfrarotbereich ausgebildet sein, um die Eingabeinformation besonders zuverlässig und störungsarm zu erfassen.

Optional kann es vorgesehen sein, dass die Ausgabeanordnung wenigstens ein Display, insbesondere LED-Display, für den Fahrzeuginnenraum umfasst, um die visuelle Ausgabe als Visualisierung einer Antwort auf die Eingabeinformation in der Gebärdensprache auszugeben, wobei vorzugsweise die Ausgabeanordnung als ein Kombiinstrument für das Fahrzeug ausgebildet ist. Dies ermöglicht eine komfortable Erkennung der Ausgabe in der Gebärdensprache.

Ebenfalls Gegenstand der Erfindung ist ein Fahrzeug mit einem erfindungsgemäßen System. So kann es im Rahmen der Erfindung von Vorteil sein, dass das Fahrzeug als ein autonomes Fahrzeug, also insbesondere als ein selbstfahrendes Kraftfahrzeug, ausgebildet ist. Ein solches Fahrzeug kann ohne Einfluss eines menschlichen Fahrers fahren, steuern und einparken. In diesem Fall ist die Nutzung des Sprachdialog-Systems besonders sinnvoll, da keiner der Fahrzeuginsassen mit der Steuerung des Fahrzeuges beschäftigt ist.

Vorteilhaft ist es zudem, wenn das Fahrzeug als ein Kraftfahrzeug, insbesondere gleisloses Landkraftfahrzeug, zum Beispiel als ein Hybridfahrzeug, das eine Brennkraftmaschine und eine Elektromaschine zur Traktion umfasst oder als ein Elektrofahrzeug ausgebildet ist, vorzugsweise mit einem Hochvolt-Bordnetz und/oder einem Elektromotor. Insbesondere kann das Fahrzeug als ein Brennstoffzellenfahrzeug und/oder Personenkraftfahrzeug ausgebildet sein. Bevorzugt ist bei Ausführungsformen von Elektrofahrzeugen kein Verbrennungsmotor beim Fahrzeug vorgesehen, es wird dann ausschließlich durch elektrische Energie angetrieben.

Gemäß einer vorteilhaften Weiterbildung der Erfindung kann vorgesehen sein, dass die Ausgabeanordnung im Fahrzeuginnenraum, insbesondere im Bereich einer Mittelkonsole, angeordnet ist, und die Bilderfassungsanordnung im Bereich eines Kombiinstruments und/oder der Mittelkonsole und/oder eines Innen- und/oder Rück- und/oder Außenspiegels des Fahrzeuges angeordnet ist. Insbesondere kann dabei die Bilderfassungsanordnung derart am Fahrzeug angeordnet sein, dass die Erfassung des Fahrers des Fahrzeuges möglich ist. Dabei ist z. B. die Anordnung der Bilderfassungsanordnung am Rück- und/oder Außenspiegel auf der Seite des Fahrzeuges sinnvoll, auf welcher auch der Fahrer des Fahrzeuges sitzt. Ferner ist es auch denkbar, dass die Erfassung durch die Bilderfassungsanordnung für weitere Insassen des Fahrzeuges erweitert wird. Entsprechend eignen sich dann auch alternative Anordnungen im oder am Fahrzeug, und/oder auch die Verwendung weiterer Bilderfassungsanordnungen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Figur 1: eine schematische Darstellung von Teilen eines erfindungsgemäßen Systems aus der Perspektive eines Innenraums des Fahrzeuges,
- Figur 2: eine schematische Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

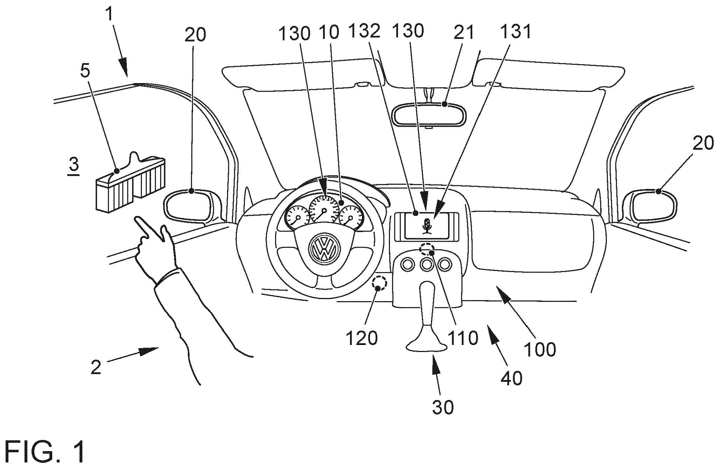

In Figur 1 ist schematisch ein System 100 für ein Fahrzeug 1 zur Bereitstellung eines Sprachdialogs in Gebärdensprache dargestellt. Die Darstellung erfolgt dabei aus der Perspektive eines Fahrzeuginsassen 2 in einem Fahrzeuginnenraum 40. Es ist eine Bilderfassungsanordnung 110 gezeigt, welche zur Erfassung einer Eingabeinformation des Fahrzeuginsassen 2 dienen kann. Hierzu überwacht die Bilderfassungsanordnung 110 den Fahrzeuginnenraum 40 optisch, um den Fahrzeuginsassen 2 visuell aufzuzeichnen. Daneben können ggf. auch weitere Fahrzeuginsassen 2 durch die Bilderfassungsanordnung 110 erfasst werden.

Es ist ferner eine Verarbeitungsanordnung 120 zur Auswertung der erfassten Eingabeinformation vorgesehen, wobei die Verarbeitungsanordnung 120 z. B. als Fahrzeugelektronik ausgebildet ist. Es kann auch möglich sein, dass die Auswertung teilweise durch externe Komponenten erfolgt, wie eine externe Datenverarbeitungsanlage. Hierzu erfolgt z. B. eine Kommunikation der Verarbeitungsanordnung mit der externen Datenverarbeitungsanlage, bspw. durch ein Netzwerk wie ein Mobilfunknetz und/oder das Internet. Auf diese Weise können zusätzliche Ressourcen zur Auswertung genutzt werden.

Außerdem kann eine Ausgabeanordnung 130 zur visuellen Ausgabe in Gebärdensprache in Abhängigkeit von der Auswertung vorgesehen sein. Üblicherweise erfolgt bei einem Sprachdialog-System sowohl die Eingabe durch den Benutzer als auch die Antwort durch das System 100 (und/oder umgekehrt) über akustische Sprache. Erfindungsgemäß kann zumindest die Antwort durch das System 100 in Gebärdensprache erfolgen. Dies ermöglicht eine Kommunikation mit dem Fahrzeug 1 somit auch dann, wenn eine Kommunikation via Lautsprache nicht möglich ist.

Die Bilderfassungsanordnung 110 kann als eine Kamera, insbesondere Infrarot-Kamera, ausgebildet sein, um wenigstens eine Geste des Fahrzeuginsassen 2 über die Eingabeinformation optisch zu erfassen. Die Geste ist dabei z. B. Teil der Gebärdensprache. Darüber hinaus kann die Eingabeinformation noch wenigstens eine Information über eine Gesichtsmimik und/oder lautlos gesprochene Wörter und/oder Körperhaltung des Fahrzeuginsassen umfassen, welche ebenfalls Teil der Gebärdensprache sein können. Dies ermöglicht es, anhand dieser Informationen die Gebärdensprache digital zu erfassen.

Außerdem kann es sich bei der über die Eingabeinformation erfassten Geste auch um eine weitere Geste handeln, welche für eine Zusatzinformation spezifisch ist. Damit kann die Zusatzinformation zusätzlich zur Information über die Gebärdensprache erfasst werden. Die Zusatzgeste ist z. B. das Zeigen auf ein Objekt 5 (dargestellt ist das Zeigen mittels eines Fingers des Fahrzeuginsassen 2, wodurch die Richtungsinformation bereitgestellt ist). Die Zusatzinformation ist dann die Information, auf welches Objekt 5 gezeigt wurde. Diese Zusatzinformation kann z. B. auch durch die Auswertung der Eingabeinformation bestimmt werden, insbesondere wenn diese auch Informationen über das Objekt 5 bzw. den Außenbereich des Fahrzeuges 1 umfasst, oder auch durch die Auswertung der Erfassung wenigstens einer weiteren Bilderfassungsanordnung (z. B. des Außenbereiches des Fahrzeuges 1) bestimmt werden. Dies ermöglicht es, bei der Auswertung eine(n) mittels der Gebärdensprache übermittelten Befehl oder Frage auszuwerten, und mit der Zusatzinformation zu vergleichen. Als die Antwort kann dann z. B. eine Information über das Objekt 5 ermittelt werden, auf welches gezeigt wurde.

Die Ausgabeanordnung 130 kann wenigstens ein Display 132, insbesondere LED-Display, für den Fahrzeuginnenraum 40 umfassen, um die visuelle Ausgabe 131 als Visualisierung einer Antwort auf die Eingabeinformation in der Gebärdensprache auszugeben, wobei vorzugsweise die Ausgabeanordnung 130 als ein Kombiinstrument 10 für das Fahrzeug 1 ausgebildet ist.

Außerdem kann die Ausgabeanordnung 130 im Fahrzeuginnenraum 40, insbesondere im Bereich einer Mittelkonsole 30, angeordnet sein, und die Bilderfassungsanordnung 110 im Bereich eines Kombiinstruments 10 und/oder der Mittelkonsole 30 und/oder eines Rückspiegels 21 und/oder Außenspiegels 20 des Fahrzeuges 1 angeordnet sein.

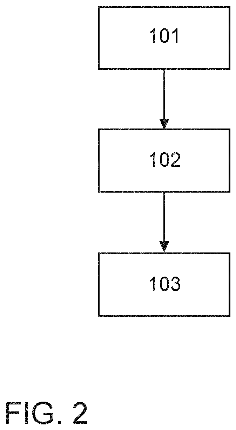

In Figur 2 ist ein erfindungsgemäßes Verfahren zur Bereitstellung eines Sprachdialogs in Gebärdensprache bei einem Sprachdialog-System für ein Fahrzeug 1 visualisiert. Gemäß einem ersten Verfahrensschritt 101 kann dabei ein Durchführen einer optischen Erfassung einer Eingabeinformation eines Fahrzeuginsassen 2 erfolgen. Gemäß einem zweiten Verfahrensschritt 102 wird eine Auswertung der erfassten Eingabeinformation durchgeführt. Anschließend kann gemäß einem dritten Verfahrensschritt 103 ein Bereitstellen einer visuellen Ausgabe 131 in Gebärdensprache in Abhängigkeit von der Auswertung erfolgen.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Fahrzeug, Kraftfahrzeug
- 2: Fahrzeuginsasse
- 3: Umgebung
- 5: Objekt

- 10: Kombiinstrument

- 20: Außenspiegel
- 21: Rückspiegel

- 30: Mittelkonsole

- 40: Fahrzeuginnenraum

- 100 101-: System
- 103: Verfahrensschritte
- 110: Bilderfassungsanordnung

- 120: Verarbeitungsanordnung
- 130: Ausgabeanordnung
- 131: visuelle Ausgabe
- 132: Display

## Patentansprüche

1. Verfahren zur Bereitstellung eines Sprachdialogs in Gebärdensprache bei einem Sprachdialog-System für ein Fahrzeug (1),
**wobei die nachfolgenden Schritte durchgeführt werden:**
- Durchführen einer optischen Erfassung einer Eingabeinformation eines Fahrzeuginsassen (2),
- Durchführen einer Auswertung der erfassten Eingabeinformation,
- Bereitstellen einer visuellen Ausgabe (131) in Gebärdensprache in Abhängigkeit von der Auswertung,
**dadurch gekennzeichnet,**
**dass** das Durchführen der Auswertung die nachfolgenden Schritte umfasst:
- Durchführen einer Detektion einer Interaktion des Fahrzeuginsassen (2) mit dem Sprachdialog-System in der Gebärdensprache anhand der Eingabeinformation, wobei vorzugsweise die Eingabeinformation als eine Bildaufzeichnung des Fahrzeuginsassen (2) ausgeführt ist, um anhand der Bildaufzeichnung die Interaktion als eine Geste des Fahrzeuginsassen (2) zu detektieren,
- Durchführen einer Analyse der Eingabeinformation zur Übersetzung der Gebärdensprache in eine für das Sprachdialog-System auswertbare inhaltliche Übersetzungsinformation, vorzugsweise eine Textinformation, nur bei erfolgreicher Detektion der Interaktion,
- Durchführen einer Detektion einer weiteren Geste des Fahrzeuginsassen (2) anhand der Eingabeinformation, welche für eine Zusatzinformation spezifisch ist,
- Generieren einer Antwort anhand der Übersetzungsinformation und anhand der Zusatzinformation, um die Antwort in der Gebärdensprache durch die visuelle Ausgabe (131) auszugeben,
wobei die Antwort wenigstens eine der nachfolgenden Informationen umfasst:
- eine Objekt-Information über ein Objekt (5) in einer Umgebung (3) des Fahrzeuges (1), wobei hierzu die Zusatzinformation eine Selektion des Objekts (5) bereitstellt,
- eine Wetterinformation,
- eine Umgebungsinformation,
- eine Nachrichteninformation,
- eine Medieninformation.

2. Verfahren nach Anspruch 1,
**dadurch gekennzeichnet,**
**dass** die Antwort zusätzlich die nachfolgende Informationen umfasst:
- eine Information über einen aktuellen Standort des Fahrzeuges (1),
wobei zum Generieren der Antwort die Informationen hinsichtlich einer Verfügbarkeit einer Ausgabe der Informationen in der Gebärdensprache gefiltert werden.

3. System (100) für ein Fahrzeug (1) zur Bereitstellung eines Sprachdialogs in Gebärdensprache, aufweisend:
- eine Bilderfassungsanordnung (110) zur Erfassung einer Eingabeinformation eines Fahrzeuginsassen (2),
- eine Verarbeitungsanordnung (120) zur Auswertung der erfassten Eingabeinformation,
- eine Ausgabeanordnung (130) zur visuellen Ausgabe in Gebärdensprache in Abhängigkeit von der Auswertung,
**dadurch gekennzeichnet,**
**dass** das System (100) als ein Sprachdialog-System eines Verfahrens nach einem der Ansprüche 1 oder 2 ausgebildet ist, um die Schritte des Verfahrens durchzuführen.

4. System (100) nach Anspruch 3,
**dadurch gekennzeichnet,**
**dass** die Bilderfassungsanordnung (110) als eine Infrarot-Kamera ausgebildet ist, um wenigstens eine Geste des Fahrzeuginsassen (2) optisch zu erfassen.

5. System (100) nach Anspruch 3 oder 4,
**dadurch gekennzeichnet,**
**dass** die Ausgabeanordnung (130) wenigstens ein Display (132), insbesondere LED-Display, für den Fahrzeuginnenraum (40) umfasst, um die visuelle Ausgabe (131) als Visualisierung einer Antwort auf die Eingabeinformation in der Gebärdensprache auszugeben, wobei vorzugsweise die Ausgabeanordnung (130) als ein Kombiinstrument (10) für das Fahrzeug (1) ausgebildet ist.

6. Fahrzeug (1) mit einem System (100) nach einem der Ansprüche 3 bis 5.

7. Fahrzeug (1) nach Anspruch 6,
**dadurch gekennzeichnet,**
**dass** das Fahrzeug (1) als ein autonomes Fahrzeug (1) ausgebildet ist.

8. Fahrzeug (1) nach Anspruch 6 oder 7,
**dadurch gekennzeichnet,**
**dass** die Ausgabeanordnung (130) im Fahrzeuginnenraum (40), insbesondere im Bereich einer Mittelkonsole (30), angeordnet ist, und die Bilderfassungsanordnung (110) im Bereich eines Kombiinstruments (10) und/oder der Mittelkonsole (30) und/oder eines Rückspiegels (21) des Fahrzeuges (1) angeordnet ist.

## Claims

1. Method for providing a speech dialog in sign language in a speech dialog system for a vehicle (1),
wherein the following steps are carried out:
- carrying out a visual capture of input information from a vehicle occupant (2),
- carrying out an evaluation of the captured input information,
- providing a visual output (131) in sign language on the basis of the evaluation,
**characterized in that**
carrying out the evaluation comprises the following steps:
- carrying out a detection of an interaction of the vehicle occupant (2) with the speech dialog system in sign language based on the input information, wherein the input information is preferably implemented as an image recording of the vehicle occupant (2) in order to detect the interaction as a gesture by the vehicle occupant (2) based on the image recording,
- carrying out an analysis of the input information in order to translate the sign language into content-based translation information, preferably textual information, that can be evaluated for the speech dialog system, only if the interaction is successfully detected,
- carrying out a detection of a further gesture by the vehicle occupant (2) based on the input information which is specific to a piece of additional information,
- generating a response based on the translation information and the additional information in order to output the response in sign language by the visual output (131),
wherein the response comprises at least one of the following pieces of information:
- object information about an object (5) in an environment (3) of the vehicle (1), wherein, for this purpose, the additional information provides selection of the object (5),
- weather information,
- environment information,
- message information,
- media information.

2. Method according to claim 1,
**characterized in that**
the response also comprises the following information:
- information about a current location of the vehicle (1), wherein, in order to generate the response, the information is filtered with regard to the availability of an output of the information in sign language.

3. System (100) for a vehicle (1) for providing a speech dialog in sign language, comprising:
- an image capture arrangement (110) for capturing input information from a vehicle occupant (2),
- a processing arrangement (120) for evaluating the captured input information,
- an output arrangement (130) for visual output in sign language on the basis of the evaluation,
**characterized in that**
the system (100) is designed as a speech dialog system of a method according to either of claims 1 or 2 in order to carry out the steps of the method.

4. System (100) according to claim 3,
**characterized in that**
the image capture arrangement (110) is designed as an infrared camera in order to optically capture at least one gesture by the vehicle occupant (2).

5. System (100) according to claim 3 or claim 4,
**characterized in that**
the output arrangement (130) comprises at least one display (132), in particular an LED display, for the vehicle interior (40) in order to output the visual output (131) as a visualization of a response to the input information in sign language, wherein the output arrangement (130) is preferably designed as an instrument cluster (10) for the vehicle (1).

6. Vehicle (1) comprising a system (100) according to any of claims 3 to 5.

7. Vehicle (1) according to claim 6,
**characterized in that**
the vehicle (1) is designed as an autonomous vehicle (1).

8. Vehicle (1) according to claim 6 or claim 7,
**characterized in that**
the output arrangement (130) is arranged in the vehicle interior (40), in particular in the region of a center console (30), and the image capture arrangement (110) is arranged in the region of an instrument cluster (10) and/or the center console (30) and/or a rear view mirror (21) of the vehicle (1).

## Revendications

1. Procédé permettant de mettre au point un dialogue à commande vocale fonctionnant avec la langue des signes dans un système de dialogue à commande vocale pour un véhicule (1),
**dans lequel les étapes suivantes sont réalisées :**
- réalisation d'une acquisition optique d'une information d'entrée d'un occupant de véhicule (2),
- réalisation d'une évaluation de l'information d'entrée acquise,
- mise au point d'une sortie visuelle (131) fonctionnant avec la langue des signes en fonction de l'évaluation,
**caractérisé en ce**
**que** la réalisation de l'évaluation comprend les étapes suivantes :
- réalisation d'une détection d'une interaction de l'occupant de véhicule (2) avec le système de dialogue à commande vocale fonctionnant avec la langue des signes à l'aide de l'information d'entrée, dans lequel l'information d'entrée est de préférence réalisée sous la forme d'un enregistrement d'image de l'occupant de véhicule (2), afin de détecter, à l'aide de l'enregistrement d'image, l'interaction sous la forme d'un geste de l'occupant de véhicule (2),
- réalisation d'une analyse de l'information d'entrée pour traduire la langue des signes en une information de traduction de contenu exploitable par le système de dialogue à commande vocale, de préférence une information de texte, uniquement si la détection de l'interaction est réussie,
- réalisation d'une détection d'un autre geste de l'occupant de véhicule (2) à l'aide de l'information d'entrée qui est spécifique à une information supplémentaire,
- génération d'une réponse sur la base de l'information de traduction et à l'aide de l'information supplémentaire afin de fournir la réponse en langue des signes par la sortie visuelle (131),
dans lequel la réponse comprend au moins une des informations suivantes :
- une information d'objet concernant un objet (5) dans un environnement (3) du véhicule (1), dans lequel l'information supplémentaire met au point à cet effet une sélection de l'objet (5),
- une information météorologique,
- une information d'environnement,
- une information d'actualité,
- une information de médias.

2. Procédé selon la revendication 1,
**caractérisé en ce**
**que** la réponse comprend en outre les informations suivantes :
- une information concernant un emplacement actuel du véhicule (1), dans lequel, pour générer la réponse, l'information est filtrée en ce qui concerne une disponibilité d'une sortie de l'information dans la langue des signes.

3. Système (100) pour un véhicule (1) destiné à mettre au point un dialogue à commande vocale fonctionnant avec la langue des signes, présentant :
- un agencement d'acquisition d'images (110) pour l'acquisition d'une information d'entrée d'un occupant de véhicule (2),
- un agencement de traitement (120) pour évaluer l'information d'entrée acquise,
- un agencement de sortie (130) pour une sortie visuelle en langue des signes en fonction de l'évaluation,
**caractérisé en ce**
**que** le système (100) est conçu comme un système de dialogue à commande vocale d'un procédé selon l'une des revendications 1 ou 2, pour réaliser les étapes du procédé.

4. Système (100) selon la revendication 3,
**caractérisé en ce**
**que** l'agencement d'acquisition d'images (110) est conçu comme une caméra infrarouge pour acquérir optiquement au moins un geste de l'occupant de véhicule (2).

5. Système (100) selon la revendication 3 ou 4,
**caractérisé en ce**
**que** l'agencement de sortie (130) comprend au moins un écran (132), en particulier un écran à DEL, pour l'habitacle de véhicule (40), afin de délivrer la sortie visuelle (131) en tant que visualisation d'une réponse à l'information d'entrée dans la langue des signes, dans lequel l'agencement de sortie (130) est de préférence conçu comme un instrument combiné (10) pour le véhicule (1).

6. Véhicule (1) comportant le système (100) selon l'une des revendications 3 à 5.

7. Véhicule (1) selon la revendication 6,
**caractérisé en ce**
**que** le véhicule (1) est conçu comme un véhicule autonome (1).

8. Véhicule (1) selon la revendication 6 ou 7,
**caractérisé en ce**
**que** l'agencement de sortie (130) est agencé dans l'habitacle de véhicule (40), en particulier dans la zone d'une console centrale (30), et l'agencement d'acquisition d'images (110) est agencé dans la zone d'un instrument combiné (10) et/ou de la console centrale (30) et/ou d'un rétroviseur (21) du véhicule (1).
